# EUROPÄISCHE PATENTSCHRIFT

(11) **EP 1 606 540 B1**
(45) Veröffentlichungstag und Bekanntmachung des Hinweises auf die Patenterteilung: **03.06.2009**
(21) Anmeldenummer: 04722159.3
(22) Anmeldetag: 20.03.2004
(51) Int. Cl.: F16K 11/056

(54) **SCHALTVENTIL MIT KURZER SCHALTZEIT**
CONTROL VALVE WITH A SHORT SWITCHING TIME
SOUPAPE DE COMMANDE A TEMPS DE REPONSE REDUIT

(30) Priorität: 26.03.2003 DE 10313484
(43) Veröffentlichungstag der Anmeldung: 21.12.2005
(73) Patentinhaber: ZF Friedrichshafen AG, 88038 Friedrichshafen (DE)
(72) Erfinder: ERATH, Robert, 88045 Friedrichshafen (DE); GIERER, Georg, 88079 Kressbronn (DE); STARK, Waldemar, 88046 Friedrichshafen (DE)
(86) Internationale Anmeldenummer: PCT/EP2004/002939
(87) Internationale Veröffentlichungsnummer: WO 2004/085852

(56) Entgegenhaltungen:
- EP-A- 0 774 605
- EP-A- 1 045 150
- DE-C- 19 636 855
- US-A- 4 765 370
- US-A- 5 040 567
- US-A1- 2001 047 828
- US-B1- 6 394 136
- US-B1- 6 484 754

## Beschreibung

Die Erfindung betrifft ein Schaltventil mit kurzer Schaltzeit gemäß dem Oberbegriff des Patentanspruchs 1.

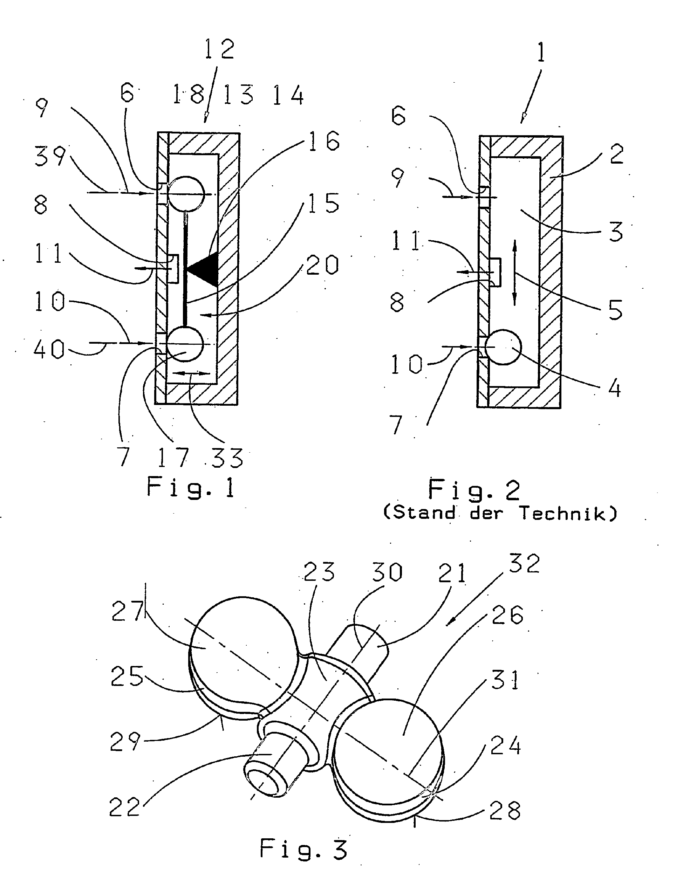

Derartig aufgebaute Schaltventile sind seit langem bekannt und werden bevorzugt in hydraulischen oder pneumatischen Steuerungseinrichtungen eingesetzt. Ein solches bekanntes Schaltventil 1 ist beispielhaft in Fig. 2 schematisch dargestellt. Es besteht zunächst aus einem Ventilgehäuse 2, das über Öffnungen 6, 7 für die Zuleitung eines Steuerdruckmediums sowie über eine Öffnung 8 zum Austritt dieses Steuerdruckmediums verfügt. An diese Öffnungen sind hier nicht dargestellte Steuerdruckleitungen anschließbar. In dem Innenraum 3 des Ventilgehäuses 2 ist ein als Kugel ausgebildetes Schaltmittel 4 entlang dem Bewegungsrichtungspfeil 5 derart freibeweglich angeordnet, dass dieses entweder die Zuleitungsöffnung 6 oder die Zuleitungsöffnung 7 verschließt und dabei wechselweise die jeweils andere Zuleitungsöffnung freigibt.

Ein solches "Oder-Kugelventil" wird in Steuerungseinrichtungen beispielsweise so eingesetzt, dass das durch die Öffnung 6 mit einer Zulaufströmung 9 in das Ventilgehäuse 1 eintretende Steuerdruckmedium einen geringeren Druck aufweist als das gleiche Steuerdruckmedium, welches mit einer zweiten Zulaufströmung 10 durch die Öffnung 7 in das Ventilgehäuse eintreten kann. Auf diese Weise verlässt das Steuerdruckmedium das Schaltventil 1 über die Abströmöffnung 8 je nach Schaltstellung mit einem niedrigeren oder mit einem höheren Steuerdruck.

Ein Schaltventil mit der beschriebenen Oder-Funktion ist auch vorteilhaft in Steuerungseinrichtungen für Automatgetrieben einsetzbar, bei denen dieses beispielsweise zur Durchführung von Übersetzungsänderungsvorgängen einen oder mehrere Getriebeaktuatoren mit unterschiedlich hohen Steuerdrücken beaufschlagt. Bedauerlicherweise können diese konstruktiv sehr einfach aufgebauten "Oder-Kugelventile" vor allem dann nicht verwendet werden, wenn eine sehr geringe Schaltzeit gefordert wird, da der Schaltweg der Schaltkugel 4 und damit die Schaltzeit vergleichsweise lang ist.

So kann beispielsweise bei Nutzung eines solchen Kugelventils in einem automatischen Kraftfahrzeug-Stufenwechselgetriebe während einer verschachtelten 5-4-3-2 Rückschaltung ein unerwünschter Druckverlauf an den Aktuatoren einer wegzuschaltenden und/oder einer zuzuschaltenden Getriebekupplung auftreten, der von einem Fahrzeugführer als Verringerung der Schaltqualität empfunden wird. Die Ursache für dieses nachteilige Schaltverhalten besteht darin, dass während des Umschaltens des Kugelventils der Aktuator der wegzuschaltenden Kupplung mit dem Aktuator der zuzuschaltenden Kupplung für einen ungünstig langen Zeitraum drucktechnisch miteinander verbunden sind.

Ähnliche Schaltventile sind auch aus der EP 1 045 150 A2, US 6,394,136 B1, DE 196 36 855 C1, US 5,040,567 A und US 6,484,754 bekannt.

Vor diesem Hintergrund besteht die Aufgabe an die Erfindung darin, ein Schaltventil zu schaffen, mit dem kürzere Schaltzeiten als mit dem beschriebenen Kugel-Schaltventil erreichbar sind.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach verfügt das Schaltventil über ein zwei Zuströmöffnungen und eine Abströmöffnung aufweisendes Ventilgehäuse, in dessen mit einem Druckmittel gefüllten Innenraum ein Schaltmittel zwischen zwei Schaltpositionen beweglich angeordnet ist. Dieses Schaltmittel kann in zwei Schaltpositionen jeweils eine der Zuströmöffnungen des Ventilgehäuses verschließen, während die jeweils andere Zuströmöffnung geöffnet wird.

Zur Erzielung der gewünschten schnellen Schaltreaktion ist nun vorgesehen, dass dieses Schaltmittel zwei separate Dichtmittel aufweist, die zum Öffnen und Schließen der Zuströmöffnungen im Ventilgehäuse entlang jeweils zugeordneter Kreisbogenabschnitte annähernd koaxial zu diesen Zuströmöffnungen bewegbar angeordnet sind. Durch die zwei separaten Dichtmittel kann der Schließ- und der Öffnungsvorgang gleichzeitig erfolgen, was sich in einer deutlich geringeren Gesamtbetätigungszeit für einen solchen Schaltvorgang niederschlägt.

In einer dazu vorteilhaften Ausgestaltung des erfindungsgemäßen Schaltventils ist das Schaltmittel so ausgebildet, dass dieses im Innenraum des Ventilgehäuses um eine Drehachse derart schwenkbar gelagert ist, dass eine Schließbewegung des einen Dichtmittels mit einer Öffnungsbewegung des anderen Dichtmittels mechanisch gekoppelt ist. Diese mechanische Kopplung der beiden separaten Dichtmittel erfolgt vorzugsweise über ein gesondertes Verbindungsstück, das im einfachsten Fall als vorzugsweise zylindrische Koppelstange ausgebildet ist.

Die Dichtmittel selbst können eine kugelförmige Geometrie aufweisen, so dass eine vergleichsweise gute Dichtwirkung zu erwarten ist. Andererseits ist es für die Nutzung kugelförmige Dichtmittel notwendig, dass diese sehr exakt auf ihren Dichtsitz im Bereich der Zuström- bzw. Abströmöffnungen am Ventilgehäuse ausgerichtet sind. Es wird daher eine klappenförmige Dichtmittelgeometrie als besonders vorteilhaft beurteilt, bei der die Dichtklappen die ihnen zugeordneten Ventilgehäuseöffnungen abdichtend überdecken können.

Bei einem besonders bevorzugten Schaltventil ist zur schwenkbaren Lagerung des Schaltmittels in dem Ventilgehäuse vorgesehen, dass an dem erwähnten Verbindungsstück zwischen den beiden separaten Dichtmitteln zwei radial von diesem Verbindungsstück wegweisende Wellenstümpfe ausgebildet sind, die in Aufnahmeöffnungen wie beispielsweise in Sacklöchern des Ventilgehäuses gelagert sind. Bei diesem Schaltventil sind zudem im wesentlichen senkrecht zur Drehachse der Wellenstümpfe zwei an dem Verbindungsstück angeordnete und radial von diesem wegweisende Schaltkugeln, Schalthalbkugeln oder Schaltklappen angeordnet.

An den beiden Schaltklappen sind wenigstens zwei im wesentlichen senkrecht zur Drehachse der Wellenstümpfe sowie im wesentlichen senkrecht zur Längsachse des Schaltmittels ausgerichtete obere Dichtflächen ausgebildet.

Es versteht sich, dass das beschriebene Schaltventil in jedem der beschriebenen Varianten als "Oder-Ventil" ausgebildet ist, mit welchem ein erster oder ein zweiter Schaltzustand einstellbar ist. Bevorzugt ist ein solches Schaltventil ein integraler Bestandteil eines hydraulischen oder pneumatischen Steuerungsgeräts, wenngleich es auch in Alleinstellung zur Beaufschlagung einer oder mehrerer Steuerungsleitungen mit vorzugsweise zwei unterschiedlichen Drücken genutzt werden kann.

Besonders vorteilhaft lässt sich das erfindungsgemäße Schaltventil als integraler Bestandteil eines hydraulischen oder pneumatischen Getriebesteuerungsgerätes nutzen, insbesondere in einem Ventilschiebergehäuse für Automatgetriebe, wobei auf ein gesondertes Ventilgehäuse verzichtet werden kann, da die Wände benachbarter Steuerdruckkanäle die Funktion der Ventilgehäusewände erfüllen.

Schließlich soll darauf hingewiesen werden, dass sich das Schaltmittel sehr kostengünstig als Spritzgussbauteil aus Metall oder aus einem Kunststoff herstellen lässt.

Zum besseren Verständnis der Erfindung ist der Beschreibung eine Zeichnung beigefügt, in der neben einem Schaltventil aus dem Stand der Technik zwei verschiedene Ausführungsformen des erfindungsgemäßen Schaltventils dar gestellt sind. Im einzelnen zeigen:
- Fig. 1: eine schematische Querschnittsdarstellung eines erfindungsgemäß ausgebildeten Schaltventils,
- Fig. 2: ein "Oder-Schaltventil" gemäß dem Stand der Technik,
- Fig. 3: eine perspektivische Darstellung eines Schaltmittels eines erfindungsgemäß ausgebildeten Schaltventils und
- Fig. 4: einen Ausschnitt aus einem Schaltplan einer hydraulischen Steuerung eines Automatgetriebes mit integriertem Schaltventil.

Wie ein Vergleich des einleitend beschriebenen Schaltventils gemäß dem Stand der Technik (Fig. 2) mit dem in Fig. 1 abgebildeten erfindungsgemäßen Schaltventil 12 zeigt, verfügt auch letzteres über ein Ventilgehäuse 13, in dessen Innenraum 14 ein Schaltmittel 20 zum wechselweise Öffnen und Schließen von zwei Druckmittelzuströmöffnungen 6, 7 angeordnet ist. Auf diese Weise ist es möglich, eine Abströmöffnung 8 mit zwei unterschiedlichen Steuerdrücken zu beaufschlagen.

Das Schaltmittel in dem in Fig. 1 gezeigten Ausführungsbeispiel besteht aus einen in einem Lager 16 schwenk- oder kippbar gelagerten Verbindungsstück 15, an dessen Enden jeweils ein Dichtmittel in Form einer Dichtkugel 17, 18 ausgebildet ist. Diese beiden Dichtkugeln 17, 18 sind hinsichtlich ihres Durchmessers und ihrer Lage in dem Ventilgehäuse 13 derart geformt und positioniert, dass mit diesen wechselweise die beiden Zuströmöffnungen 6, 7 druckdicht verschlossen werden können. Das Lager 16 wirkt bei der hier gezeigten Bauform wie das Lager einer Wippe, so dass eine in das Ventil 12 durch die Gehäuseöffnung 6 geleitete Zulaufströmung 9 auf die erwähnte Schaltkugel 18 wirkt und diese entlang eines Kreisbogenabschnitts nach rechts von der Öffnung 6 wegbewegt. Da die Schaltkugel 18 über das Verbindungsstück 15 mit der zweiten Schaltkugel 17 mechanisch verbunden ist, bewegt sich diese entlang eines Kreisbogenabschnitts gemäß dem Richtungspfeil 33 nach links, bis diese die zweite Zuströmöffnung 7 verschließt. Dem in das Ventilgehäuse 13 geleiteten Steuerdruckmittel bleibt ein Abströmweg über die Abströmöffnung 8 offen, so dass durch diese eine Ablaufströmung 11 mit dem ersten Steuerungsdruck das Schaltventil 12 verläst.

In der zweiten möglichen Schaltposition des Schaltventils 12 wirkt auf die die Zuströmöffnung 7 verschließende Dichtkugel 17 eine Zulaufströmung 10 mit einem vorzugsweise höheren Steuerdruck, so dass sich die Dichtkugel 17 in Öffnungsrichtung nach rechts und die Dichtkugel 18 in Schließrichtung nach links auf die Öffnung 6 zu bewegt, bis diese verschlossen ist. Auf diese Weise wird auch der Ventilinnenraum 14 mit dem in der Zulaufströmung 10 vorherrschenden Steuerdruck beaufschlagt werden, so dass dieser Steuerdruck auch derjenige ist, den die die Ablauföffnung 8 passierende Ablaufströmung 11 aufweist.

Neben der in Fig. 1 gezeigten Bauweise kann das Schaltmittel des erfindungsgemäßen Schaltventils auch so wie in Fig. 3 dargestellt ausgebildet sein. In dieser Bauvariante besteht das vorzugsweise aus einem Metall oder einem Kunststoff spritzgegossene Schaltmittel 32 aus einem zentralen Verbindungsstück 23, an dem zwei sich gegenüberstehende Schaltklappen 24, 25 entlang einer Schaltmittellängsachse 31 angeordnet sind. Diese Schaltklappen 24, 25 verfügen über jeweils eine obere Dichtfläche 26, 27 und jeweils eine untere Dichtfläche 28, 29, mit denen wechselweise Zu- oder Abströmöffnungen in dem Schaltventilgehäuse verschlossen oder geöffnet werden können. Zudem sind an dem Verbindungsstück 23 sich radial entgegengesetzt erstreckende Wellenstümpfe 21, 22 angeordnet, die in dem Ventilgehäuse 13 derart gelagert sind, dass das Schaltmittel 32 um die Drehachse 30 der Wellenstümpfe 21, 22 schwenkbar ist.

Die Dichtkugeln 17, 18 beziehungsweise die Dichtklappen 24, 25 werden bei einer Ventilbetätigung in dem Ventilgehäuse 13 daher derart bewegt, dass diese verschwenkungsbedingt jeweils zugeordneten Kreisbogenabschnitten folgen, die aufgrund der vergleichsweise kleinen Betätigungswege als annähernd koaxial ausgerichtet zu den Längsmittenachsen 39, 40 der Zuströmöffnungen 6, 7 angesehen werden können.

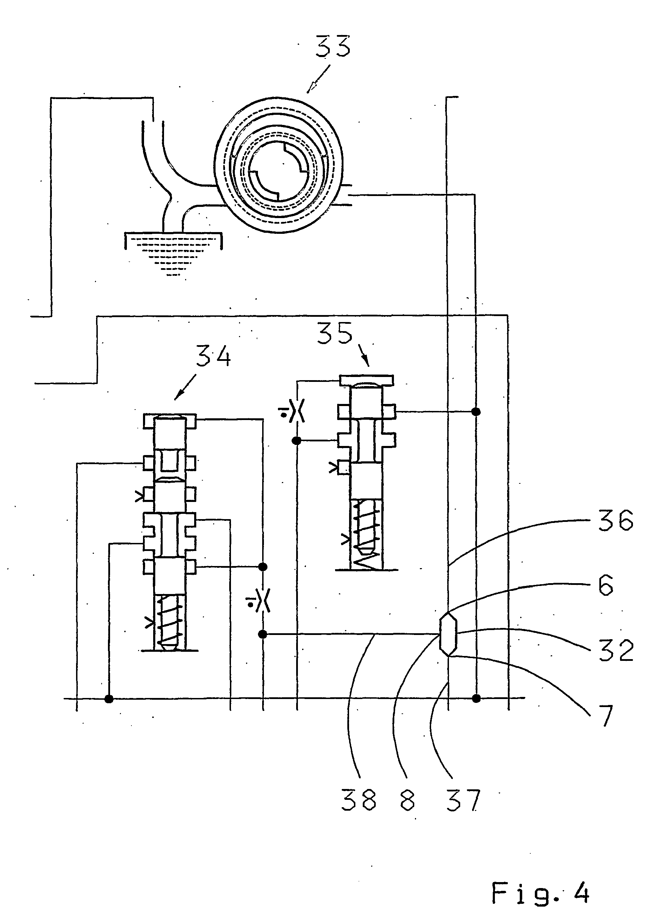

Wie der Ausschnitt aus einem Hydraulikschaltplan gemäß Fig. 4 zeigt, kann ein hier nur symbolisch dargestelltes aber erfindungsgemäß ausgebildetes Schaltventil 32 sehr vorteilhaft in einer hydraulischen Getriebesteuerung eingesetzt werden, wobei dieses vorzugsweise als Bestandteil in ein Ventilschiebergehäuse für Automatgetriebe integriert sein kann. Wie in dieser Darstellung angedeutet wird, gehört zu der hydraulischen Getriebesteuerung eine einen Steuerhauptdruck erzeugende Druckmittelpumpe 33, zwei Steuerdruckregelventile 34, 35 und das erfindungsgemäße Schaltventil 32, welches mit seinen Zuströmöffnungen 6, 7 an Zulaufleitungen 36, 37 sowie mit ihrer Ablauföffnung 8 an eine Ablaufleitung 38 angeschlossne ist.

Vergleichsuntersuchungen mit einem Schaltventil nach dem Stand der Technik gemäß Fig. 2 sowie mit einem erfindungsgemäß ausgebildeten Schaltventil zeigten sowohl im Versuchsaufbau als in einer Getriebesteuerungseinrichtung in einem Kraftfahrzeug, dass die Schaltdauer mit dem erfindungsgemäßen Schaltventil bei einer Hydrauliköltemperatur von -15º C um den Faktor 8 und bei einer Hydrauliköltemperatur von 100º C um den Faktor 4 kürzer als mit dem bekannten Kugel-Schaltventil. Daher ließen sich bei Nutzung des erfindungsgemäß ausgebildeten Schaltventils die eingangs erläuterten Schaltqualitätsbeeinträchtigungen nicht nachweisen.

### Bezugszeichen

- 1: Schaltventil (Stand der Technik)
- 2: Ventilgehäuse
- 3: Ventilinnenraum
- 4: Schaltmittel (Kugel)
- 5: Bewegungsrichtung
- 6: Zuströmöffnung
- 7: Zuströmöffnung
- 8: Abströmöffnung
- 9: Zulaufströmung
- 10: Zulaufströmung
- 11: Ablaufströmung
- 12: Schaltventil
- 13: Ventilgehäuse
- 14: Ventilinnenraum
- 15: Verbindungsstück
- 16: Lager
- 17: Dichtkugel
- 18: Dichtkugel
- 20: Schaltmittel
- 21: Wellenstupf
- 22: Wellenstumpf
- 23: Verbindungsstück
- 24: Schaltklappe
- 25: Schaltklappe
- 26: erste obere Dichtfläche
- 27: zweite obere Dichtfläche
- 28: erste untere Dichtfläche
- 29: zweite untere Dichtfläche
- 30: Drehachse
- 31: Schaltmittellängsachse
- 32: Schaltmittel
- 33: Bewegungsrichtung
- 34: Regelventil
- 35: Regelventil
- 36: Zulaufleitung
- 37: Zulaufleitung
- 38: Ablaufleitung
- 39: Mittenlängsachse einer Ventilgehäuseöffnung
- 40: Mittenlängsachse einer Ventilgehäuseöffnung

## Patentansprüche

1. Schaltventil (12), mit einem zwei Zuströmöffnungen (6, 7) und eine Abströmöffnung (8) aufweisenden Ventilgehäuse (13), in dessen mit einem Steuerdruckmittel befüllbaren Innenraum (14) ein Schaltmittel (20, 32) beweglich zwischen zwei Schaltpositionen angeordnet ist, wobei
- das Schaltmittel (20, 32) in beiden Schaltpositionen jeweils eine der Zuströmöffnungen des Ventilgehäuses (13) öffnet und die jeweils andere Zuströmröffnung verschließt,
- das Schaltmittel (20, 32) zwei separate Dichtmittel (17, 18; 24, 25) aufweist, die zum Öffnen und Schließen von zwei Öffnungen (6, 7) im Ventilgehäuse (13) entlang jeweils zugeordneter Kreisbogenabschnitte annähernd koaxial zu diesen Zuströmöffnungen (6, 7) bewegbar angeordnet sind,
- das Schaltmittel (20, 32) im Innenraum (14) des Ventilgehäuses (13) um eine Dreh- oder Kippachse (30) frei verschwenkbar gelagert angeordnet ist,
- die beiden separaten Dichtmittel (17, 18; 24, 25) des Schaltmittels (20, 32) über ein Verbindungsstück (15, 23) miteinander verbunden sind,
**dadurch gekennzeichnet, dass**
- das Schaltmittel (20, 32) über zwei radial von dem Verbindungsstück (15, 23) wegweisende Wellenstümpfe (21, 22) verfügt, die in Aufnahmeöffnungen, vorzugsweise in Sacklöchern des Ventilgehäuses (13) gelagert sind,
- im wesentlichen senkrecht zur Drehachse (30) der Wellenstümpfe (21, 22) zwei radial von dem Verbindungsstück (23) wegweisende Schaltkugeln (17, 18) oder Schaltklappen (24, 25) angeordnet sind und
- die Schaltklappen (24, 25) über wenigstens zwei im Wesentlichen senkrecht zur Drehachse (30) sowie im wesentlichen senkrecht zur Längsachse (31) des Schaltmittels (32) ausgerichtete obere Dichtflächen (26, 27) verfügen,
- wobei das Schaltmittel (20, 32) seine Schaltposition nur durch Beaufschlagung der Zuströmöffnungen (6, 7) mit Steuerdruckmittel ändert.

2. Schaltventil nach Anspruch 1, **dadurch gekennzeichnet, dass** die Dichtmittel (17, 18; 24, 25) kugelförmig oder klappenförmig ausgebildet sind.

3. Schaltventil nach Anspruch 1 oder 2, **dadurch gekennzeichnet, dass** gegenüber den oberen Dichtflächen (26, 27) untere Dichtflächen (28, 29) ausgebildet sind.

4. Schaltventil nach Anspruch 1, 2 oder 3, **dadurch gekennzeichnet, dass** dieses als ein "Oder-Ventil" ausgebildet ist, mit welchem ein erster oder ein zweiter Schaltzustand einstellbar ist.

5. Schaltventil nach wenigstens einem der Ansprüche 1 bis 4, **dadurch gekennzeichnet, dass** dieses integrale Bestandteil eines hydraulischen oder pneumatischen Steuerungsgerätes ist.

6. Schaltventil nach Anspruch 5, **dadurch gekennzeichnet, dass** dieses integrale Bestandteil eines hydraulischen oder pneumatischen Getriebesteuerungsgerätes insbesondere in ein Ventilschiebergehäuse für Automatgetriebe integriert ist.

7. Schaltventil nach wenigstens einem der vorherigen Ansprüche, **dadurch gekennzeichnet, dass** dieses ein aus Metall oder einem Kunststoff hergestelltes Spritzgussbauteil ist.

## Claims

1. Switching valve (12), with a valve housing (13) which has two inflow orifices (6, 7) and one outflow orifice (8) and in whose inner space (14) capable of being filled with a control pressure medium a switching means (20, 32) is arranged movably between two switching positions,
- in the two switching positions the switching means (20, 32) in each case opening one of the inflow orifices of the valve housing (13) and closing the other inflow orifice in each case,
- the switching means (20, 32) having two separate sealing means (17, 18; 24, 25) which, for the opening and closing of two orifices (6, 7) in the valve housing (13), are arranged so as to be moveable, along segments of an arc of a circle assigned in each case, approximately coaxially with respect to these inflow orifices (6, 7),
- the switching means (20, 32) being arranged in the inner space (14) of the valve housing (13) so as to be mounted freely pivotably about a rotation or tilt axis (30),
- the two separate sealing means (17, 18; 24, 25) of the switching means (20, 32) being connected to one another via a connection piece (15, 23),
**characterized in that**
- the switching means (20, 32) has two shaft stubs (21, 22) which point radially away from the connection piece (15, 23) and which are mounted in reception orifices, preferably in blind holes of the valve housing (13),
- two switching balls (17, 18) or switching flaps (24, 25) pointing radially away from the connection piece (23) are arranged essentially perpendicularly with respect to the rotation axis (30) of the shaft stubs (21, 22), and
- the switching flaps (24, 25) have at least two upper sealing faces (26, 27) oriented essentially perpendicularly with respect to the rotation axis (30) and essentially perpendicularly with respect to the longitudinal axis (31) of the switching means (32),
- the switching means (20, 32) changing its switching position only as a result of the action of control pressure medium upon the inflow orifices (6, 7).

2. Switching valve according to Claim 1, **characterized in that** the sealing means (17, 18; 24, 25) are of spherical or flap-shaped design.

3. Switching valve according to Claim 1 or 2, **characterized in that** lower sealing faces (28, 29) are formed opposite the upper sealing faces (26, 27).

4. Switching valve according to Claim 1, 2 or 3, **characterized in that** this is designed as an "OR valve", by means of which a first or a second switching state can be set.

5. Switching valve according to at least one of Claims 1 to 4, **characterized in that** this is an integral component of a hydraulic or pneumatic control apparatus.

6. Switching valve according to Claim 5, **characterized in that** this is an integral component of a hydraulic or pneumatic transmission control apparatus, in particular is integrated into a valve-slide housing for automatic transmissions.

7. Switching valve according to at least one of the preceding claims, **characterized in that** this is an injection-moulded component produced from metal or from a plastic.

## Revendications

1. Soupape de commande (12) comprenant un boîtier de soupape (13) présentant deux ouvertures d'entrée (6, 7) et une ouverture de sortie (8), dans l'espace interne (14) duquel, pouvant être rempli par un fluide de commande sous pression, est disposé un moyen de commutation (20, 32) pouvant être déplacé entre deux positions de commutation,
- le moyen de commutation (20, 32), dans deux positions de commutation, ouvrant à chaque fois l'une des ouvertures d'entrée du boîtier de soupape (13) et fermant l'autre ouverture d'entrée respective,
- le moyen de commutation (20, 32) présentant deux moyens d'étanchéité séparés (17, 18 ; 24, 25) qui sont prévus pour ouvrir et fermer deux ouvertures (6, 7) dans le boîtier de soupape (13) le long de deux portions d'arc de cercle associées respectives, de manière déplaçable approximativement coaxialement à ces ouvertures d'entrée (6, 7),
- le moyen de commutation (20, 32) étant disposé dans l'espace interne (14) du boîtier de soupape (13), monté de manière à pouvoir pivoter librement autour d'un axe de rotation ou de basculement (30),
- les deux moyens d'étanchéité séparés (17, 18 ; 24, 25) du moyen de commutation (20, 32) étant connectés l'un à l'autre par le biais d'une pièce de connexion (15, 23),
**caractérisée en ce que**
- le moyen de commutation (20, 32) dispose de deux bouts d'arbre (21, 22) tournés radialement à l'opposé de la pièce de connexion (15, 23), qui sont montés dans des ouvertures de réception, de préférence dans des trous borgnes du boîtier de soupape (13),
- deux billes de commutation (17, 18) ou clapets de commutation (24, 25) tournés radialement à l'opposé de la pièce de connexion (23) sont disposés essentiellement perpendiculairement à l'axe de rotation (30) des bouts d'arbre (21, 22), et
- les clapets de commutation (24, 25) disposent d'au moins deux surfaces d'étanchéité supérieures (26, 27) orientées essentiellement perpendiculairement à l'axe de rotation (30) et essentiellement perpendiculairement à l'axe longitudinal (31) du moyen de commutation (32),
- le moyen de commutation (20, 32) modifiant sa position de commutation uniquement en sollicitant les ouvertures d'entrée (6, 7) avec du fluide de commande sous pression.

2. Soupape de commande selon la revendication 1, **caractérisée en ce que** les moyens d'étanchéité (17, 18 ; 24, 25) sont réalisés en forme de billes ou de clapets.

3. Soupape de commande selon la revendication 1 ou 2, **caractérisée en ce que** des surfaces d'étanchéité inférieures (28, 29) sont réalisées en face des surfaces d'étanchéité supérieures (26, 27).

4. Soupape de commande selon la revendication 1, 2 ou 3, **caractérisée en ce qu'**elle est réalisée sous forme de "soupape-ou" avec laquelle un premier ou un deuxième état de commutation peut être ajusté.

5. Soupape de commande selon l'une quelconque des revendications 1 à 4, **caractérisée en ce que** celle-ci fait partie intégrante d'un appareil de commande hydraulique ou pneumatique.

6. Soupape de commande selon la revendication 5, **caractérisée en ce que** ce constituant intégral d'un appareil de commande hydraulique ou pneumatique est intégré notamment dans un boîtier de tiroir de soupape pour boîte de vitesses automatique.

7. Soupape de commande selon au moins l'une quelconque des revendications précédentes, **caractérisée en ce que** celle-ci est un composant moulé par injection fabriqué en métal ou en plastique.
